# EUROPÄISCHE PATENTSCHRIFT

(11) **EP 0 874 972 B1**
(45) Veröffentlichungstag und Bekanntmachung des Hinweises auf die Patenterteilung: **10.04.2002**
(21) Anmeldenummer: 97914062.1
(22) Anmeldetag: 16.01.1997
(51) Int. Cl.: G01B 7/12

(54) **SCHALTUNGSANORDNUNG ZUR MESSTECHNISCHEN BESTIMMUNG VON DURCHMESSERN METALLISCHER KÖRPER**
CIRCUIT ARRANGEMENT FOR THE METROLOGICAL DETERMINATION OF DIAMETERS OF METAL BODIES
CIRCUITERIE POUR DETERMINER DES DIAMETRES DE CORPS METALLIQUES PAR DES TECHNIQUES DE MESURE

(30) Priorität: 17.01.1996 DE 29600775 U; 20.02.1996 DE 19606154
(43) Veröffentlichungstag der Anmeldung: 04.11.1998
(73) Patentinhaber: Patent-Treuhand-Gesellschaft für elektrische Glühlampen mbH, 81543 München (DE)
(72) Erfinder: SPANGENBERG, Robert, D-86830 Schwabmünchen (DE); PAUKER, Fritz, D-86316 Friedberg (DE); GAHN, Alfred, D-86343 Königsbrunn (DE)
(86) Internationale Anmeldenummer: DE9700073
(87) Internationale Veröffentlichungsnummer: WO9726504

(56) Entgegenhaltungen:
- US-A- 4 141 149
- PATENT ABSTRACTS OF JAPAN vol. 006, no. 055 (E-101), 10.April 1982 & JP 56 169909 A (SEIKOSHA CO LTD), 26.Dezember 1981,
- PATENT ABSTRACTS OF JAPAN vol. 013, no. 035 (P-818), 26.Januar 1989 & JP 63 233381 A (HITACHI CABLE LTD), 29.September 1988,

## Beschreibung

### Technisches Gebiet

Die vorliegende Erfindung betrifft eine Schaltungsanordnung zur meßtechnischen Bestimmung von Durchmessern metallischer Körper, insbesondere von Drähten, nach dem Oberbegriff des Anspruchs 1.

Durchmesser metallischer Körper, insbesondere von Drähten, werden für unterschiedliche Zwecke bestimmt.

Eine Bestimmung des Durchmessers eines Drahtes ist beispielsweise bei der Herstellung von Glühlampen von Bedeutung. Die für die Herstellung von Glühlampen verwendeten Drähte müssen einen annähernd konstanten Durchmesser aufweisen, ansonsten besteht die Gefahr, daß die Drähte an Stellen, an denen der Durchmesser zu groß oder zu gering ist, für die weitere Verarbeitung ungeeignet sind. Die Drähte, die für die Herstellung von Glühlampen verwendet werden, haben einen Durchmesser im Bereich von typisch 8 - 500 µm. Eine direkte mechanische Messung des Durchmessers dieser Drähte, etwa mittels einer Mikrometerschraube, ist in der Praxis nicht möglich. Ein Verfahren des Standes der Technik besteht darin, Drahtsegmente definierter Länge, beispielsweise 200 mm, zu wiegen, um aus dem Gewicht den Durchschnittsdurchmesser des Drahtsegments abzuleiten (Abwiegeverfahren).

Da die Qualität einer Glühlampe von ihrer Lebensdauer und diese u. a. von der Gleichmäßigkeit des für die Glühwendel verwendeten Wolframdrahtes abhängt, ist es von großer Bedeutung, bei der Herstellung von Glühlampen bereits in einem frühen Stadium der Herstellung, nämlich bei der Bereitstellung und Reinigung des Drahtes, festzustellen, welche Drahtabschnitte für die weitere Verarbeitung ungeeignet sind. Ungeeignet sind Drahtabschnitte, deren Durchmesser über bzw. unter einem bestimmten Sollwert liegen.

### Stand der Technik

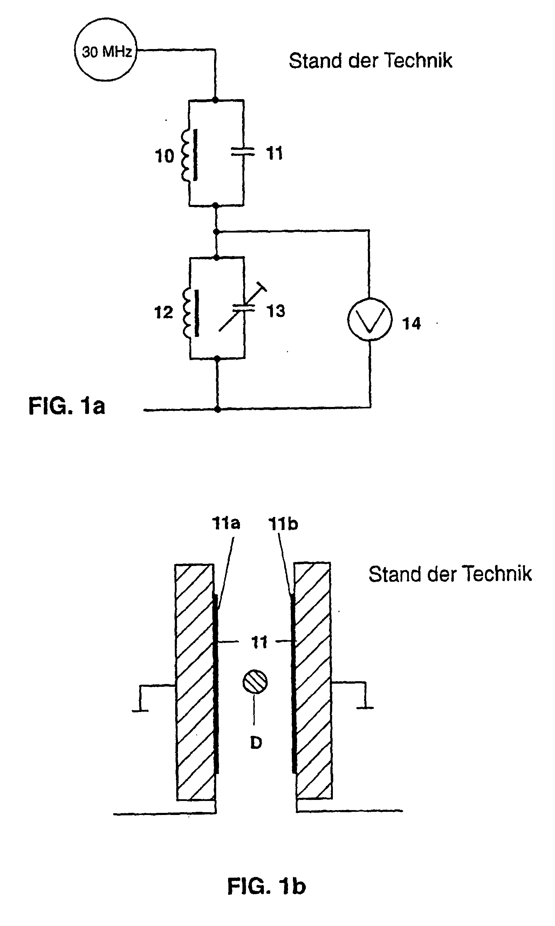

Im Stand der Technik wird ein Oszillator, der ein hochfrequentes (HF-) Signal im Megahertz-Bereich erzeugt, mittels eines Meßkondensators (Kondensator 11; in Figur 1a, 1b), dessen Kapazität sich mit dem Durchmesser des hindurchgeführten Drahtes verändert, in der Frequenz verstimmt. Aus dieser Verstimmung wird ein Ausgangssignal gebildet und eine Drahtdurchmesserabweichung bezüglich eines durchschnittlichen Durchmessers, der mittels des obengenannten Abwiegeverfahren bestimmt werden kann, bestimmt (HF-Mikrometer). Wird der Durchmesser am Drahtanfang nach dem Abwiegeverfahren ermittelt und mit den gemessenen relativen Werten verknüpft, entsteht ein Datensatz mit absoluten Drahtdurchmessern.

Mit der Schaltungsanordnung läßt sich also ermitteln, ob ein bestimmtes Drahtsegment für die Herstellung eines bestimmten Glühlampentyps geeignet ist.

Das HF-Mikrometer nach dem Stand der Technik hat den Nachteil, daß das Ausgangssignal, das die Durchmesserabweichung des Drahtes repräsentieren soll, instabil ist, wobei die Instabilität durch schwankende Umgebungsparameter (Temperatur, Luftfeuchtigkeit, usw.), welche die Dielektrizitätskonstante des Meßkondensators und damit dessen Kapazität beeinflussen, zustandekommt. Diese Problematik besteht insbesondere an den Fertigungsstätten der Wolframdrähte, wo die Raumtemperatur von einer Vielzahl in der Praxis kaum zu beherrschenden Parametern (Wärmeemission der Maschinen, etc.) beeinflußt wird. Diesem gravierenden Nachteil des Standes der Technik wird dadurch abgeholfen, daß die Messung in einem von der Umwelt abgeschirmten Klimaraum durchgeführt wird. Abgesehen davon, daß eine solche Maßnahme sehr energie- und kostenaufwendig ist, ist der Einsatz dieses Verfahrens zur automatischen Prüfung direkt an den Drahtfertigungsstätten unmöglich.

### Darstellung der Erfindung

Es ist daher die Aufgabe der vorliegenden Erfindung, eine Schaltungsanordnung zur meßtechnischen Bestimmung von Durchmessern der eingangs genannten Art bereitzustellen, die in einfacher Weise eine zuverlässige und stabile Messung von Durchmesseränderungen ermöglicht.

Diese Aufgabe wird durch die kennzeichnenden Merkmale des Anspruchs 1 gelöst. Besonders vorteilhafte Ausgestaltungen finden sich in den abhängigen Ansprüchen.

Erfindungsgemäß werden Meßsignale relativ hoher Genauigkeit durch Kompensation der Umgebungsparameter (z.B. Umgebungstemperatur und/oder Umgebungsluftfeuchtigkeit) der Meßanordnung gebildet. Die Genauigkeit der von der erfindungsgemäßen Schaltungsanordnung gebildeten Signale ist insbesondere von Umgebungstemperatur bzw. Umgebungstemperaturschwankungen unabhängig. Vorzugsweise werden die Umgebungsparameter während des gesamten Meßzeitraums berücksichtigt. Dazu wird ein dynamisches Referenzsignal gebildet, das von den Umgebungsparametern abhängig ist. Diese Meßanordnung benötigt keinen von der Umwelt abgeschirmten Klimaraum, sondern kann ohne weiteres in Räumen eingesetzt werden, in denen Drähte hergestellt oder verarbeitet werden.

Die Messung der Durchmesserabweichung wird im niederfrequenten (NF-) Bereich von 10 kHz bis 30 kHz durchgeführt, womit diese Frequenz wesentlich niedriger als die im Stand der Technik verwendete Frequenz ist (NF-Mikrometer).

Vorzugsweise wird die Verknüpfung des Referenzsignals und des Sensorsignals mittels eines Spannungsmeßgeräts durchgeführt.

Die erfindungsgemäße Schaltungsanordnung zeichnet sich weiterhin durch ihren vergleichsweise einfachen Aufbau aus.

Der Kondensator, der das Sensorsignal erzeugt, ist vorzugsweise in unmittelbarer räumlicher Nachbarschaft zu dem Referenzsensor oder auch auf einem gemeinsamen Träger angeordnet, so daß gewährleistet ist, daß die am Ort der eigentlichen Messung herrschenden Umgebungsparameter durch beide Sensoren gleichermaßen berücksichtigt werden.

Bei einem weiteren bevorzugten Ausführungsbeispiel wird das Referenzsignal durch einen Kondensator erzeugt. Dieser kann vorzugsweise genauso aufgebaut sein wie der Kondensator der Sensoreinrichtung, der das Sensorsignal erzeugt.

### Beschreibung der Zeichnungen

Nachfolgend wird die vorliegende Erfindung anhand bevorzugter Ausführungsbeispiele in Verbindung mit den Figuren näher erläutert. Dabei zeigen:
- Fig. 1a: ein Schaltbild einer herkömmlichen Meßschaltungsanordnung (HF-Mikrometer);
- Fig. 1b: eine Konfiguration des Meßkondensators mit eingeführtem Draht gemäß dem Stand der Technik;
- Fig. 2: die Kennlinie des Ausgangssignals der Meßschaltung nach Fig. 1;
- Fig. 3a: eine Schaltungsanordnung gemäß der vorliegenden Erfindung (NF-Mikrometer);
- Fig. 3b: eine Konfiguration des Meßkondensators der Schaltung nach Fig. 3a;
- Fig. 3c: ein elektrisches Schaltbild mit einer Signalsummenbildung mittels Feldeffekt-Transistoren;
- Fig. 4: Kennlinien der ersten und der zweiten Einrichtung sowie eine Ausgangskennlinie der erfindungsgemäßen Schaltung nach Fig. 3a;
- Fig. 5a: eine mechanische Ausgestaltung eines Kondensators und einer Drahtführung der erfindungsgemäßen Meßeinrichtung;
- Fig. 5b: eine mechanische Ausgestaltung der erfindungsgemäßen Meßeinrichtung mit aktiver Abschirmung;
- Fig. 6a: ein Signal eines Drahtes mit Durchmesserschwankungen, das mit einer herkömmlichen Schaltungsanordnung nach Fig. 1 erzeugt wird;
- Fig. 6b: ein Referenzsignal und ein Sensorsignal einer Schaltungsanordnung gemäß der vorliegenden Erfindung nach Fig. 3a;
- Fig. 6c: ein Ausgangssignal, das aus der Verknüpfung des Referenzsignals mit dem Sensorsignal nach Fig. 6b gebildet ist;
- Fig. 7a: eine Anordnung zur Wendelsteigungsfehlerbestimmung gemäß der Erfindung;
- Fig. 7b: eine Konfiguration zur Schaltung nach Fig. 7a;
- Fig. 7c: ein elektrisches Schaltbild der Schaltung nach Fig. 7a mit einer Signalsummenbildung mittels Feldeffekt-Transistoren;
- Fig. 8: Ausgangssignale bei der Anordnung nach Fig. 7a;
- Fig. 9: eine mechanische Anordnung der Schaltung nach Fig. 7a.

Fig. 1a zeigt eine Meßschaltung gemäß einer Schaltungsanordnung des Standes der Technik. Die Schaltungsanordnung umfaßt einen Durchmessersensor, der aus einer Spule 10 und einem Kondensator 11 besteht, und eine Abgleicheinrichtung, die aus einer Spule 12 und einem Abgleichkondensator 13 besteht. Die Schaltungsanordnung weist ferner ein Spannungsmeßgerät 14 auf, das parallel zur Abgleicheinrichtung geschaltet ist.

Die herkömmliche Schaltungsanordnung nach Figur 1a wird mit hochfrequenten Signalen im Megahertz-Bereich (z.B. 30 MHz) betrieben. Ein Draht, dessen Durchmesserabweichung zu bestimmen ist, wird in den Kondensator 11 geführt. Bei Beginn der Messung wird der Abgleichkondensator 13 der Abgleicheinrichtung so eingestellt, daß das Spannungsmeßgerät 14 auf Null eingestellt wird. Das zu messende Drahtsegment wird in seiner vollen Länge durch den Meßkondensator hindurchgeführt. Mit den Durchmesserschwankungen des Drahtes schwankt die Kapazität des Kondensators 11, wodurch im Zusammenwirken der Spule 10 und des Kondensators 11 der von diesen beiden Elementen gebildete Oszillator in seiner Frequenz verstimmt wird. Das Spannungsmeßgerät 14 zeigt in Abhängigkeit der Verstimmung entweder eine positive oder eine negative Spannung an. Aus dieser Spannung läßt sich eine Aussage über die relative Schwankung des Durchmessers derjenigen Stelle des Drahtes machen, die sich gerade im Kondensator 11 befindet.

Fig. 1b zeigt den Meßkondensator mit den beiden Platten 11a und 11b und dem zu messenden Draht D, der sich zwischen den beiden Kondensatorplatten befindet.

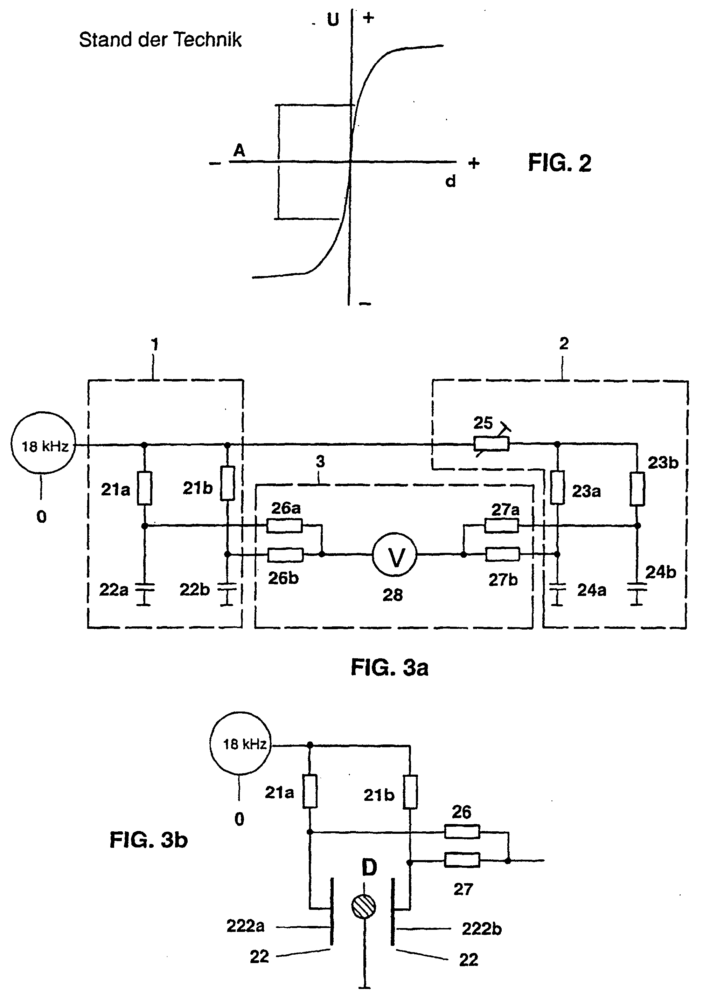

Fig. 2 zeigt eine Kennlinie der Schaltungsanordnung nach Figur 1a. Dieser Kennliniengraph zeigt die Abhängigkeit der Spannungsänderung U (an 14 in Fig. 1a), auf der Ordinate aufgetragen, von der Änderung des Drahtdurchmessers d, der auf der Abszisse aufgetragen ist. In der Praxis ermöglicht diese Schaltungsanordnung eine Bestimmung des Durchmessers in dem Arbeitsbereich A, da die Kennlinie dieser Schaltungsanordnung nur dort linear und damit einfach auswertbar ist.

Figur 3a zeigt das Schaltbild einer Meßbrücke gemäß der vorliegenden Erfindung. Die Meßbrücke dient insbesondere der meßtechnischen Bestimmung von Durchmessern von Drähten, die für die Herstellung von Glühlampen bestimmt sind, und besteht aus einer Sensoreinheit 1 ("erste Einrichtung"), einer Referenzeinheit 2 ("zweite Einrichtung") und einer Meßeinheit 3 ("dritte Einrichtung"), welche die Sensorsignale und die Referenzsignale miteinander verknüpft. Die erste Einrichtung 1 weist zwei Widerstände 21a, 21b und einen Meßkondensator 22 (Fig. 3b) auf, der zusammen mit dem zu messenden Draht D zwei Kapazitäten 22a, 22b bildet. Der Draht D ist geerdet. Die zweite Einheit 2 weist zwei parallele R-C-Zweige (23a, 24a; 23b, 24b) und ein Abgleichpotentiometer 25 auf. Die dritte Einrichtung 3 ist insbesondere so ausgestaltet, daß sie die Scheinwiderstände der Meßzweige und der Referenzzweige vergleicht. Die Widerstände 26a, 26b der dritten Einrichtung 3 sind derart angeordnet, daß an dem Anzeigeinstrument 28 die Summe der Potentiale der Mittelpunkte der beiden Meßzweige liegt. Über die Widerstände 27a, 27b wird in entsprechender Weise die Summe der Potentiale aus der Referenzeinrichtung zugeführt. Das Anzeigeinstrument 28 ist hier als Spannungsmesser ausgestaltet. Die Schaltung wird durch einen niederfrequent schwingenden Oszillator O angeregt.

Figur 3b zeigt eine Konfiguration der erfindungsgemäßen Anordnung. Der geerdete Draht D bildet zusammen mit den Kondensatorplatten 222a, 222b zwei Kondensatoren 22a und 22b (vgl. Fig. 3a).

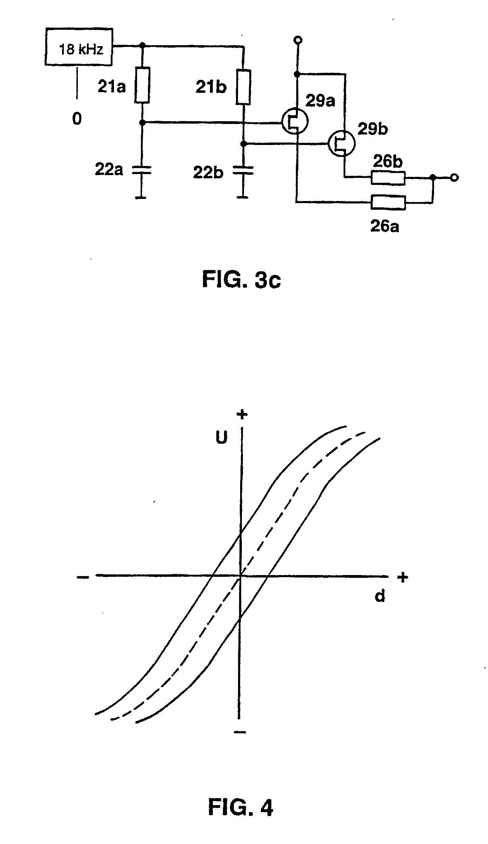

Figur 3c zeigt als weitere Ausführungsform der erfindungsgemäßen Schaltungsanordnung eine Anordnung zweier Feldeffekt-Transistoren (29a, 29b) als Impedanzwandler zur niederohmigen Erzeugung des Ausgangssignals der Meßeinrichtung. In entsprechender Weise kann das Ausgangssignal der Referenzeinheit gewandelt werden.

Bei der Auswahl eines geeigneten Feldeffekttransistors ist auf einen hohen Eingangswiderstand und geringe parasitäre Kapazitäten zu achten.

Das Meßprinzip der Schaltungsanordnung gemäß Fig. 3a beruht darauf, daß durch die erste Einrichtung die Niederfrequenz- (NF-) Wechselstromwiderstände der Kondensator-Draht-Konfiguration gemessen und Signale erzeugt werden, die den von Draht D und Meßkondensator 22 gebildeten Kapazitäten 22a, 22b umgekehrt proportional sind. Gleichzeitig mit der Erfassung der Durchmesserabweichung d des Drahtes D werden in dieser erfindungsgemäßen Anordnung durch die zweite Einrichtung Umgebungsparameter (z.B. Temperatur, Luftfeuchtigkeit) erfaßt und von diesen abhängige Referenzsignale gebildet. Die erste Einrichtung 1 und die zweite Einrichtung 2 sind so ausgestaltet und so zueinander angeordnet, daß sie im wesentlichen derselben Umgebungstemperatur und/oder derselben Umgebungsluftfeuchtigkeit ausgesetzt sind.

Der Draht, dessen Durchmesserabweichung zu bestimmen ist, ist in den Zwischenraum der beiden Kondensatorplatten 222a, 222b eingeführt. Die Sensoreinrichtung 1 erzeugt ein für die Kapazitäten des Draht/Kondensator-Systems repräsentatives Sensorsignal, das ferner von den genannten Umweltparametern beeinflußt wird. Die Referenzeinrichtung 2 erzeugt ein Referenzsignal, das von denselben Umweltparametern beeinflußt wird. Die Vergleichseinrichtung 3 verknüpft das von der Referenzeinrichtung 2 erzeugte Referenzsignal mit dem von der Sensoreinrichtung 1 erzeugten Sensorsignal und bildet ein Ausgangssignal, z. B. eine Spannung, wobei der Einfluß von Umgebungstemperatur und/oder Umgebungsluftfeuchtigkeit auf die Meßeinrichtung 1 kompensiert ist. Die Messung kann damit in beliebigen Umgebungen durchgeführt werden, ohne daß die Genauigkeit der Messung reduziert wird. Ein Konstanthalten bestimmter Umgebungsparamter, z. B. in einem Klimaraum, ist für ein korrektes Meßergebnis somit nicht erforderlich.

Figur 4 dient der Erläuterung des erfindungsgemäßen Kompensationsprinzips. Die durchgezogenen Kurven zeigen die Veränderung des Ausgangssignals der ersten Einrichtung 1 und der zweiten Einrichtung 2 in Abhängigkeit der Schwankung eines der Parameter Temperatur oder Luftfeuchtigkeit. Da beide Einrichtungen 1, 2 so entworfen und realisiert werden können, daß ihre Kennlinien die gleiche Steigung aufweisen, d. h. gleichartig auf Parameterschwankungen reagieren, kann durch Differenzbildung der Signale der beiden Einrichtungen (ggf. nach einmaliger Nullpunktsverschiebung der beiden Kurven durch Abgleich, vgl. gestrichelte Kennlinie) der Einfluß der Parameterschwankungen auf die Meßeinrichtung 3 kompensiert werden. Dies ließe sich mit einer Anordnung nach dem Stand der Technik (HF-Mikrometer) nicht verwirklichen, da es in der Praxis kaum möglich ist, zwei Oszillatoren mit hinreichend ähnlicher Kennliniensteigung zu realisieren.

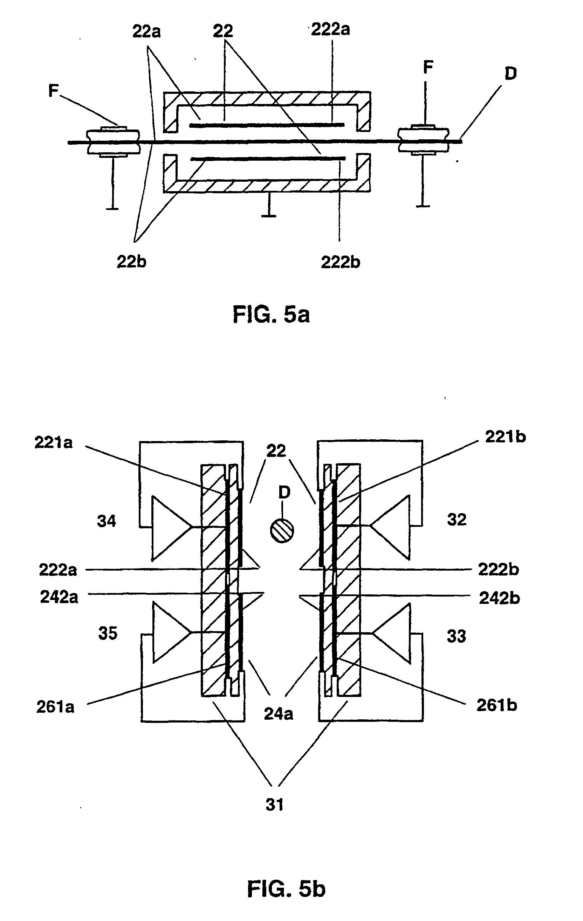

Fig. 5a zeigt den schon anhand der Figuren 3b, 3c beschriebenen Meßkondensator 22, in den der Draht D, dessen Durchmesser gemessen werden soll, eingeführt ist. Dabei ist der Draht so in den Kondensator 22 einzuführen, daß er jeweils zu den Kondensatorplatten 222a und 222b annähernd den gleichen Abstand aufweist. Hierzu wird der Draht D vorteilhafterweise über Rollen F geführt, die eine auf dem Umfang umlaufende Nut aufweisen. Zusätzlich dienen diese Rollen der Erdung des Drahtes. Typische Kantenlängen für die Kondensatorplatten 222a, 222b sind 8 mm mal 14 mm, der Plattenabstand beträgt typisch 1 mm. Zur Messung unterschiedlich starker Drähte kann der Plattenabstand variiert werden.

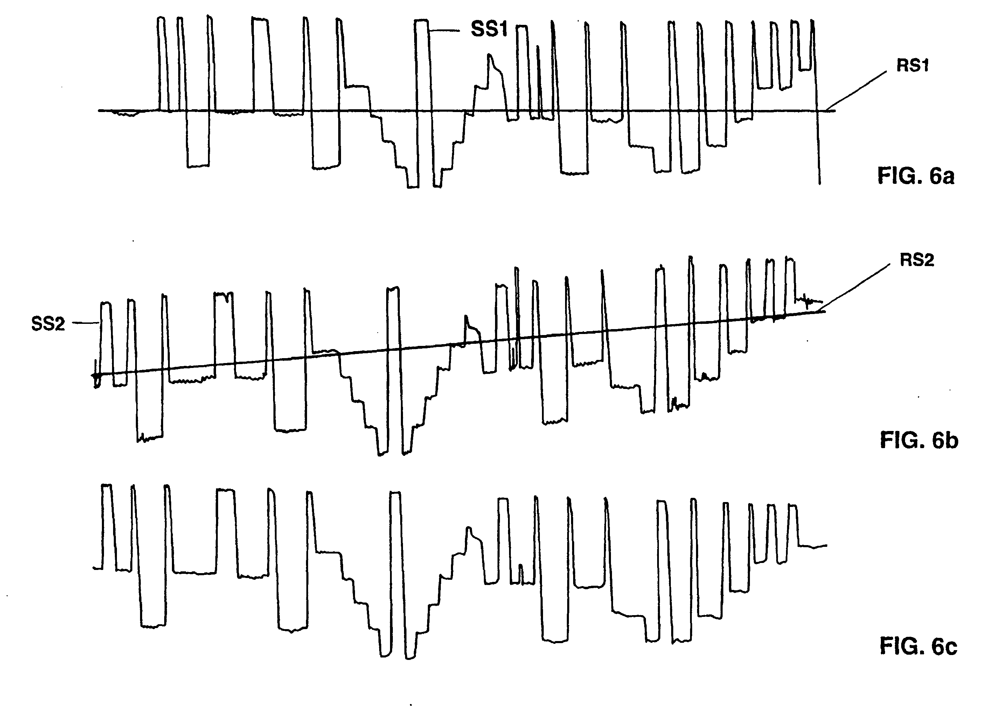

Das resultierende Ausgangssignal wird auch bei diesem Meßverfahren nicht absolut bestimmt. Statt dessen wird das Ausgangssignal zu Beginn eines Meßvorganges bei in die Meßeinrichtung 1 eingeführtern Draht durch Einstellung des Potentiometers 25 auf Null abgeglichen. Nach diesem Einstellvorgang wird das Ausgangssignal (an 28 in Fig. 3a) in Abhängigkeit der Referenzsignale (erzeugt durch die zweite Einrichtung 2) gebildet, die wiederum in Abhängigkeit der jeweils herrschenden Umgebungsparameter entstehen. In der erfindungsgemäßen Schaltungsanordnung werden fortlaufend aktualisierte Referenzsignale (vgl. Fig. 6b) gebildet. Aus der Verknüpfung des Sensorsignals und des Referenzsignals wird das Ausgangssignal mittels der Vergleichseinrichtung 28 erzeugt. Änderungen des Drahtdurchmessers haben ein positives bzw. ein negatives Signal zur Folge, wie z. B. in Fig. 6b dargestellt ist.

Indem der Draht in seiner ganzen Länge durch den Kondensator 22 geführt wird, läßt sich für jede Stelle entlang des Drahtes die Abweichung des Drahtdurchmessers bezogen auf den Anfangswert ermitteln.

Fig. 5b zeigt eine bevorzugte Ausführungsform der Anordnung des Meßkondensators 22 und eines Kondensators 24a der zweiten Einrichtung 2 mit einer aktiven Abschirmung. Bei dieser bevorzugten Anordnung befindet sich der Kondensator 22 in unmittelbarer räumlicher Nachbarschaft zu dem Kondensator 24a. Die Kondensatoren 22, 24a weisen die Kondensatorplatten 222a, 222b bzw. 242a, 242b auf. Die Kondensatorplatten 222a und 222b sind bei der in der Figur 5b dargestellten Anordnung unmittelbar über den Kondensatorplatten 242a und 242b des Kondensators 24a an einer Halteeinrichtung 31 angebracht. Die Halteeinrichtung 31 besteht aus zwei Teilen (links und rechts in der Figur), wobei jedes Teil z. B. aus zwei Platinen (schräg schraffiert) besteht. Die metallischen Platten 221a, 221b, 261a, 261b sind parallel zu den Kondensatorplatten angeordnet und bilden eine aktive Abschirmung, indem die Kondensatorplatten und die Abschirmplatten mittels der Impedanzwandler 32-35 jeweils auf dasselbe Potential gesetzt werden. Diese Abschirmungsanordnung bewirkt, daß die Kapazitäten der beiden Kondensatoren 22 und 24a unabhängig von externen elektromagnetischen Störeinflüssen sind. Der Draht D wird auch hier über in der Figur nicht dargestellte Führungsrollen geerdet.

In Figur 6 sind Signale, die den Durchmesser eines identischen Drahtsegments repräsentieren, über die Drahtlänge aufgetragen. Als Drahtsegment wurde ein Draht mit relativ großen Durchmesserschwankungen verwendet.

Figur 6a zeigt das Signal eines Drahtes mit Durchmesserschwankungen, das mit einer herkömmlichen Schaltungsanordnung aufgezeichnet ist. Beim Stand der Technik erfolgt nur zu Beginn der Messung ein Abgleich auf Null. Dieser Abgleichswert RS1 wird für den gesamten Verlauf der Messung beibehalten. Das Signal SS1 bezeichnet die relativen Durchmesserschwankungen über die Drahtlänge.

Figur 6b zeigt die Messung mit einer Schaltungsanordnung gemäß der vorliegenden Erfindung. In dieser Figur ist sowohl ein Referenzsignal RS2 wie auch ein Sensorsignal SS2 gezeigt. Die Änderung der Umgebungsparameter bewirkt im dargestellten Beispiel auch eine Änderung des Referenzsignals RS2.

Figur 6c zeigt das von der Vergleichseinrichtung 3 (Fig. 3a) erzeugte Ausgangssignal, das dadurch erzeugt wird, daß das Referenzsignal RS2 vom Sensorsignal SS2 subtrahiert wird, um den Einfluß durch Schwankung der Umgebungsparameter während des Meßvorganges zu kompensieren.

Während Figur 6a die Werte eines Meßvorganges darstellt, die sich über eine relativ kurze Zeit (z.B. 5 Minuten) beschränkt und in einem klimatisierten Raum mit konstant gehaltenen Umgebungsparametern (Temperatur, Luftfeuchtigkeit) durchgeführt wird, sind in den Figuren 6b und 6c Werte eines Meßvorganges dargestellt, der sich über eine relativ lange Zeit (z. B. 2 Stunden) erstrecken kann und unter normalen Produktionsbedingungen stattfindet.

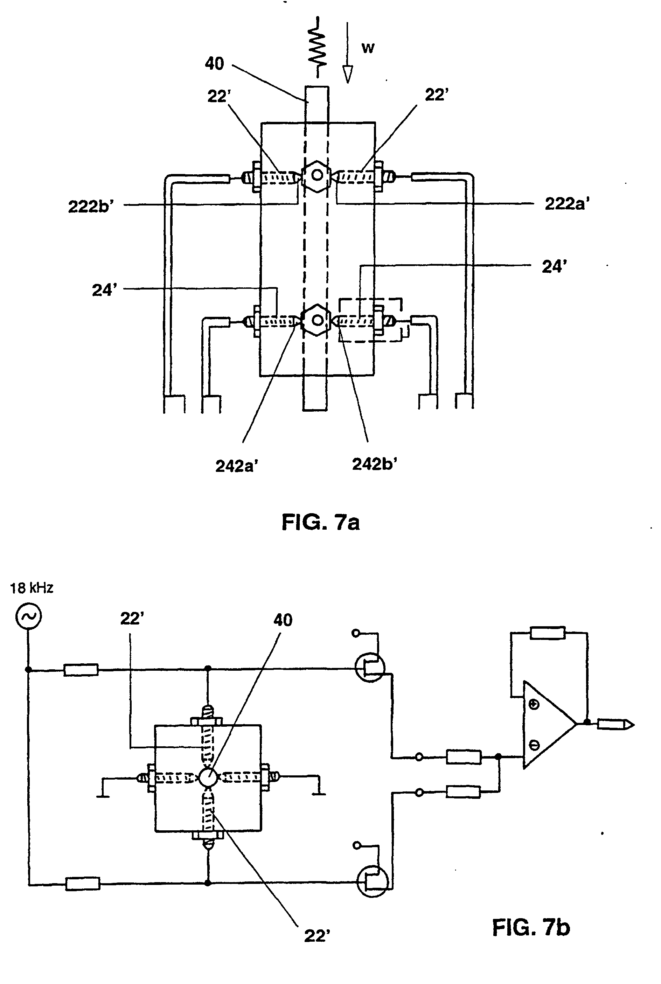

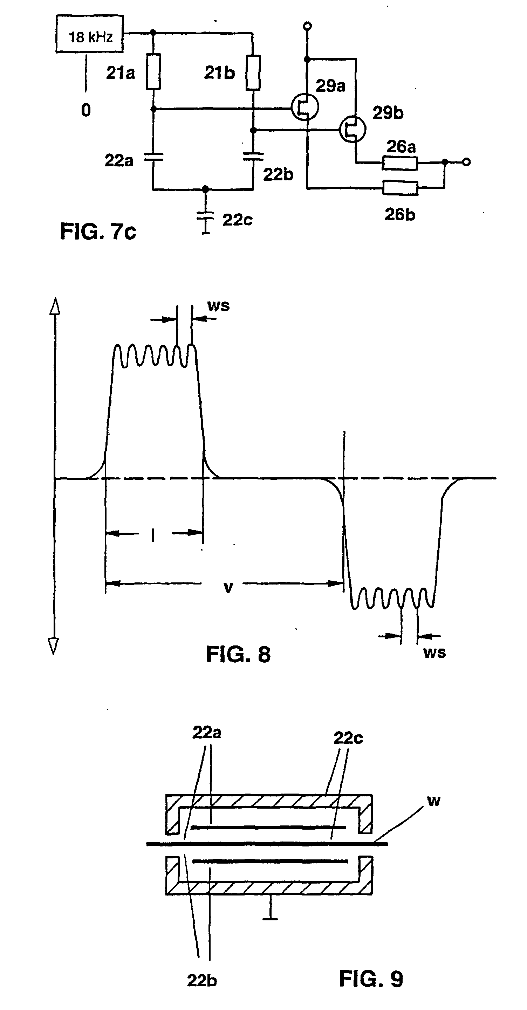

Die erfindungsgemäße Schaltung kann vorteilhaft auch zur Untersuchung von Glühlampen-Wendeln abgewandelt werden. Figur 7 zeigt eine Anordnung zur Detektion von Glühlampen-Wendelsteigungsfehlern und/oder Glühlampen-Wendellängen. Eine Wendel w wird vorzugsweise vertikal in die Anordnung eingeführt. Figur 7a zeigt eine Seitenansicht der Anordnung und Figur 7b eine Draufsicht der Anordnung. Die Anordnung weist ein Keramikrohr 40 auf, das von einer Kondensatoranordnung (22', 24') umgeben ist. Diese Kondensatoranordnung entspricht schematisch der in Figur 3a dargestellten Anordnung. Jedoch sind hier beide Einrichtungen 1, 2 als Sensoren ausgebildet. Zur Erzielung einer besonders hohen Ortsauflösung ist diese Kondensatoranordnung mechanisch derart ausgestaltet, daß die Kondensatorelektroden 222a', 222b', 242a', 242b' nadelförmig, z.B als Schrauben ausgebildet sind. Hier werden beide Sensorsignale zur Bestimmung der Wendelsteigungsfehler verwendet. Der entsprechende Signalverlauf beim Durchgang der Wendel im Bereich des in vertikaler Richtung ersten und zweiten Kondensators ist in Figur 8 dargestellt. Aus der Periodizität des Signals kann auf die Wendelsteigung ws geschlossen werden. Die Messung in der zweiten Einrichtung 2 dient einerseits der Erhöhung der Genauigkeit, andererseits kann hieraus die Geschwindigkeit v der hindurchtretenden Wendel ermittelt werden, was die Bestimmung der Länge 1 der Wendeln ermöglicht. Ein Nullabgleich der Meßeinrichtung kann in dieser Einrichtung in der Zeitspanne zwischen dem Hindurchtreten zweier Wendeln automatisch durchgeführt werden.

Fig. 7c entspricht Fig. 3c, wobei die Wendel w (Fig. 7a) beim Durchgang durch die Meßeinrichtung jedoch eine zusätzliche Kapazität 22c gegen Masse bildet, da die Wendel nicht mit Masse verbunden ist.

Fig. 9 zeigt den Meßkondensator bei Verwendung der Sensoreinrichtung zur Wendelsteigungsfehler-Bestimmung. Da die Wendeln nicht geerdet sind, bildet der Draht mit dem Sensorgehäuse eine dritte Kapazität 22c. Auch diese Kondensatoranordnung kann durch eine aktive Abschirmung ergänzt werden.

## Patentansprüche

1. Schaltungsanordnung zur meßtechnischen Bestimmung von Durchmessern metallischer Körper, insbesondere von Drähten, mit einer ersten Einrichtung (1), die ein Sensorsignal erzeugt, und einem Oszillator (O), der der ersten Einrichtung (1) elektrische Signale einer vorgebbaren Frequenz zuführt, **dadurch gekennzeichnet,**
- **daß** die Schaltungsanordnung eine zweite Einrichtung (2), die ein Referenzsignal in Abhängigkeit der Umgebungstemperatur und/oder der Umgebungsluftfeuchtigkeit erzeugt, und eine dritte Einrichtung (3) aufweist, die das Sensorsignal mit dem Referenzsignal verknüpft und ein Ausgangssignal erzeugt, das eine Änderung des Durchmessers des metallischen Körpers repräsentiert,
- **daß** die erste Einrichtung (1) und die zweite Einrichtung (2) in der Weise zueinander angeordnet sind, daß beide Einrichtungen derselben Umgebungstemperatur und/oder derselben Umgebungsluftfeuchtigkeit ausgesetzt sind, so daß bei der Bildung des Ausgangssignals der Einfluß von Umgebungstemperatur und/oder der Umgebungsluftfeuchtigkeit kompensiert wird.

2. Schaltungsanordnung nach Anspruch 1, **dadurch gekennzeichnet, daß** das Referenzsignal zu unterschiedlichen Zeitpunkten während der Messung der Durchmesseränderungen erzeugt wird.

3. Schaltungsanordnung nach Anspruchs 1, **dadurch gekennzeichnet, daß** der Oszillator (O) der ersten und der zweiten Einrichtung (1, 2) elektrische Signale im Frequenzbereich von etwa 10 KHz bis 30 KHz zurührt.

4. Schaltungsanordnung nach Anspruch 1, 2 oder 3, **dadurch gekennzeichnet, daß** die dritte Einrichtung (3) ein Spannungsmeßgerät enthält.

5. Schaltungsanordnung nach einem der vorstehenden Ansprüche, **dadurch gekennzeichnet, daß** die erste Einrichtung (1) mindestens einen Kondensator (22) umfaßt, in den der metallische Körper, dessen Durchmesser zu messen ist, einführbar ist.

6. Schaltungsanordnung nach Anspruch 5; **dadurch gekennzeichnet, daß** der Kondensator (22) ein Plattenkondensator ist, dessen Plätten (222a, 222b) jeweils eine Fläche von etwa 8 mm x 14 mm aufweisen und einen Abstand von mindestens 1 mm aufweisen.

7. Schaltungsanordnung nach Anspruch 6, **dadurch gekennzeichnet, daß** der Plattenkondensator mechanisch in der Weise ausgestaltet ist, daß der Abstand der Platten variierbar ist.

8. Schaltungsanordnung nach Anspruch 6 oder 7, **dadurch gekennzeichnet, daß** die Platten aus Kupferlaminat gebildet sind.

9. Schaltungsanordnung nach Anspruch 8, **dadurch gekennzeichnet, daß** das Kupferlaminat versilbert ist.

10. Schaltungsanordnung nach einem der Ansprüche 5 bis 9, **dadurch gekennzeichnet, daß** der Kondensator (22) in unmittelbarer räumlicher Nachbarschaft zu einem Sensor (24a, 24b) der zweiten Einrichtung (23a, 23b, 24a, 24b) angeordnet ist.

11. Schaltungsanordnung nach Anspruch 10, **dadurch gekennzeichnet, daß** der Kondensator (22) und der Sensor (24a, 24b) auf einem gemeinsamen Träger (31) angeordnet sind.

12. Schaltungsanordnung nach Anspruch 10, **dadurch gekennzeichnet, daß** parallel zu den Platten des Kondensators (22) an der Außenseite des Kondensators weitere Platten angeordnet sind, deren Potential gleich dem Potential der Kondensatorplatten ist.

13. Schaltungsanordnung nach Anspruch 10 oder 11, **dadurch gekennzeichnet, daß** der Sensor (24a, 24b) ein Kondensator ist.

14. Schaltungsanordnung nach Anspruch 13, **dadurch gekennzeichnet, daß** der Kondensator (24a, 24b) des Sensors identisch aufgebaut ist wie der Kondensator (22) der ersten Einrichtung (1).

15. Verwendung einer Schaltungsanordnung nach einem der vorstehenden Ansprüche für eine Detektion von Glühlampen-Wendelsteigungsfehlern und/oder Glühlampen-Wendellängen.

16. Anordnung einer ersten Einrichtung (1)
• mit einem Kondensator (22),
• welche erste Einrichtung (1) geeignet ist, im Betrieb ein Sensorsignal zu erzeugen,
und einer zweiten Einrichtung (2)
• mit einem Sensor (24a, 24b),
• welche zweite Einrichtung (2) geeignet ist, im Betrieb ein Referenzsignal zu erzeugen,
in der Weise, daß beide Einrichtungen derselben Umgebungstemperatur und/oder derselben Umgebungsluftfeuchtigkeit ausgesetzt sind, so daß gegebenenfalls bei der Bildung eines Ausgangssignals aus Sensorsignal und Referenzsignal der Einfluß von Umgebungstemperatur und/oder der Umgebungsluftfeuchtigkeit kompensiert werden kann,
• wobei Kondensator (22) und Sensor (24a, 24b) die kennzeichnenden Merkmale eines der Ansprüche 10 bis 14 aufweisen.

## Claims

1. Circuit arrangement for measuring diameters of metal bodies, in particular of wires, having a first device (1) which generates a sensor signal, and an oscillator (O) which feeds electric signals of a prescribable frequency to the first device (1), **characterized in that**
- the circuit arrangement has a second device (2), which generates a reference signal as a function of the ambient temperature and/or the ambient atmospheric humidity, and has a third device (3) which combines the sensor signal with the reference signal and generates an output signal which represents a change in the diameter of the metal body, and
- **in that** the first device (1) and the second device (2) are arranged in such a way relative to one another that both devices are exposed to the same ambient temperature and/or the same ambient atmospheric humidity, with the result that the influence of ambient temperature and/or the ambient atmospheric humidity is compensated for when forming the output signal.

2. Circuit arrangement according to Claim 1, **characterized in that** the reference signal is generated at different instants during the measurement of the changes in diameter.

3. Circuit arrangement according to Claim 1 **characterized in that** the oscillator (O) feeds the first and the second device (1, 2) electric signals in the frequency band from approximately 10 kHz to 30 kHz.

4. Circuit arrangement according to Claim 1, 2 or 3, **characterized in that** the third device (3) contains a voltmeter.

5. Circuit arrangement according to one of the preceding claims, **characterized in that** the first device (1) comprises at least one capacitor (22) into which the metal body whose diameter is to be measured can be inserted.

6. Circuit arrangement according to Claim 5, **characterized in that** the capacitor (22) is a plate capacitor whose plates (222a, 222b) in each case have an area of approximately 8 mm × 14 mm and have a spacing of at least 1 mm.

7. Circuit arrangement according to Claim 6, **characterized in that** the plate capacitor is configured mechanically in such a way that the spacing of the plates is variable.

8. Circuit arrangement according to Claim 6 or 7, **characterized in that** the plates are formed from copper laminate.

9. Circuit arrangement according to Claim 8, **characterized in that** the copper laminate is silver plated.

10. Circuit arrangement according to one of claims 5 to 9, **characterized in that** the capacitor (22) is arranged in direct spatial proximity to a sensor (24a, 24b) of the second device (23a, 23b, 24a, 24b).

11. Circuit arrangement according to Claim 10, **characterized in that** the capacitor (22) and the sensor (24a, 24b) are arranged on a common carrier (31).

12. Circuit arrangement according to Claim 10, **characterized in that** further plates, whose potential is equal to the potential of the capacitor plates, are arranged parallel to the plates of the capacitor (22) on the outside of the capacitor.

13. Circuit arrangement according to Claim 10 or 11, **characterized in that** the sensor (24a, 24b) is a capacitor.

14. Circuit arrangement according to Claim 13, **characterized in that** the capacitor (24a, 24b) of the sensor is of identical design to the capacitor (22) of the first device (1).

15. Use of a circuit arrangement according to one of the preceding claims for detecting lead errors in incandescent lamp filaments and/or lengths of incandescent lamp filaments.

16. Arrangement of a first device (1)
• with a capacitor (22),
• which first device (1) is suitable for generating a sensor signal in operation,
and of a second device (2)
• with a sensor (24a, 24b)
• which second device (2) is suitable for generating a reference signal in operation,
in such a way that the two devices are exposed to the same ambient temperature and/or the same ambient atmospheric humidity, with the result that it is possible, if appropriate, when forming an output signal from the sensor signal and reference signal to compensate for the influence of ambient temperature and/or the ambient atmospheric humidity,
• the capacitor (22) and sensor (24a, 24b) having the characterizing features of one of claims 10 to 14.

## Revendications

1. Montage pour déterminer, par des techniques de mesure, des diamètres de pièces métalliques, notamment de fils, comprenant un premier dispositif (1), qui produit un signal de capteur et un oscillateur (O), qui envoie au premier dispositif (1) des signaux électriques d'une fréquence pouvant être prescrite, **caractérisé**
- **en ce que** le montage comporte un deuxième dispositif (2), qui produit un signal de référence en fonction de la température ambiante et/ou de l'humidité de l'air ambiant, et un troisième dispositif (3), qui combine le signal de capteur ou signal de référence et produit un signal de sortie qui représente une variation du diamètre de la pièce métallique,
- **en ce que** le premier dispositif (1) et le deuxième dispositif (2) sont disposés l'un par rapport à l'autre, de manière que les deux dispositifs soient soumis à la même température ambiante et/ou à la même humidité de l'air ambiant, de sorte que lors de la formation du signal de sortie l'influence de la température ambiante et/ou de l'humidité de l'air ambiant est compensé.

2. Montage suivant la revendication 1, **caractérisé en ce que** le signal de référence est produit à des instants différents pendant la mesure des variations de diamètre.

3. Montage suivant la revendication 1, **caractérisé en ce qu'**il est envoyé à l'oscillateur (O) du premier et du deuxième dispositif (1, 2) des signaux électriques dans le domaine de fréquence d'environ 10 KHz à 30 KHz.

4. Montage suivant la revendication 1, 2 ou 3, **caractérisé en ce que** le troisième dispositif (3) comporte un appareil de mesure de la tension électrique.

5. Montage suivant l'une des revendications précédentes, **caractérisé en ce que** le premier dispositif (1) comporte au moins un condensateur (22), dans lequel peut être introduite la pièce métallique dont il faut mesurer le diamètre.

6. Montage suivant la revendication 5, **caractérisé en ce que** le condensateur (22) est un condensateur à plateaux dont les plateaux (222a, 222b) ont respectivement une surface d'environ 8 mm x 14 mm et sont à une distance d'au moins 1 mm.

7. Montage suivant la revendication 6, **caractérisé en ce que** le condensateur à plateaux est conformé mécaniquement de manière que la distance entre les plateaux puisse varier.

8. Montage suivant la revendication 6 ou 7, **caractérisé en ce que** les plateaux sont en un stratifié de cuivre.

9. Montage suivant la revendication 8, **caractérisé en ce que** le stratifié de cuivre est argenté.

10. Montage suivant l'une des revendications 5 à 9, **caractérisé en ce que** le condensateur (22) est disposé à proximité immédiate d'un capteur (24a, 24b) du deuxième dispositif (23a, 23b, 24a, 24b).

11. Montage suivant la revendication 10, **caractérisé en ce que** le condensateur (22) et le capteur (24a, 24b) sont disposés sur un support (31) commun.

12. Montage suivant la revendication 10, **caractérisé en ce qu'**il est prévu parallèlement aux plateaux du condensateur (22), du côté extérieur du condensateur, d'autres plateaux dont le potentiel est égal au potentiel des plateaux du condensateur.

13. Montage suivant la revendication 10 ou 11, **caractérisé en ce que** le capteur (24a, 24b) est un condensateur.

14. Montage suivant la revendication 13, **caractérisé en ce que** le condensateur (24a, 24b) du capteur est constitué de manière identique au condensateur (22) du premier dispositif (1).

15. Utilisation d'un montage suivant l'une des revendications précédentes pour la détection de défauts de pas de filament de lampes à incandescence ou de longueur de filament de lampes à incandescence.

16. Agencement d'un premier dispositif (1)
• ayant un condensateur (22),
• ce premier dispositif (1) étant propre à produire en fonctionnement un signal de capteur;
et d'un deuxième dispositif (2)
• ayant un capteur (24a, 24b),
• ce deuxième dispositif (2) étant propre à produire en fonctionnement un signal de référence,
de façon que les deux dispositifs soient soumis à la même température ambiante et/ou à la même humidité de l'air ambiant, de sorte que l'influence éventuelle de la température ambiante et/ou de l'humidité de l'air ambiant puisse être compensée lors de la formation d'un signal de sortie constitué du signal de capteur et du signal de référence,
• le condensateur (22) et le capteur (24a, 24b) ayant les dispositions caractéristiques de l'une des revendications 10 à 14.
